# EUROPÄISCHE PATENTANMELDUNG

(11) **EP 0 987 199 A1**
(43) Veröffentlichungstag der Anmeldung: **22.03.2000**
(21) Anmeldenummer: 99110560.2
(22) Anmeldetag: 01.06.1999
(51) Int. Cl.: B65G 15/58, B28C 5/40

(54) **Vorrichtung zur Zuführung von magnetisierbarem faserförmigem Fördergut**

(30) Priorität: 09.09.1998 DE 29816204 U
(71) Anmelder: Liebherr-Mischtechnik GmbH, 88427 Bad Schussenried (DE)
(72) Erfinder: Baumeister, Kurt, Dipl.-Ing.(FH), 88422 Bad Buchau (DE); Kletsch, Reinhold, Dipl.-Ing. (FH), 88422 Bad Buchau (DE)
(74) Vertreter: Gossel, Hans K., Dipl.-Ing.

(57) **Zusammenfassung**

Die Erfindung betrifft eine Vorrichtung zur Zuführung von magnetisierbarem Fördergut mit einem Magnetförderer (14), der das Fördergut entlang einer Förderbahn von einer Aufnahmeseite zu einer Abwurfseite mittels eines wandernden Magnetfeldes befördert. Um eine Vorrichtung zu schaffen, mit der das Fördergut auf dem Magnetförderer (14) auf einfache Weise aufgebracht werden kann, ohne daß der Magnetförderer (14) belastet oder ohne daß weitere Zuführvorrichtungen vorgesehen werden müssen, ist eine Stellvorrichtung (7) vorgesehen, mit der die Aufnahmeseite der Förderbahn von oben herab auf das Fördergut derart absenkbar ist, daß das Fördergut an dem freien Ende aufgenommen und auf der Förderbahn weiterbefördert wird.

## Beschreibung

Die Erfindung betrifft eine Vorrichtung zur Zuführung von magnetisierbarem Fördergut mit einem Magnetförderer, der das Fördergut entlang einer Förderbahn von einer Aufnahmeseite zu einer Abwurfseite mittels eines wandernden Magnetfeldes befördert.

Magnetförderer sind grundsätzlich bekannt und dienen der Abförderung und Entsorgung von ferromagnetischem Material, insbesondere von Stahlfasern oder Stahlspänen.

Aus der FR 2,561,217 ist ein Magnetförderer bekannt, der magnetisierbares Fördergut von einem Aufnahmetrichter zu einem oberhalb gelegenen Trog weiterbefördert.

Aus der DE 43 43 039 A1 ist eine Fördereinrichtung mit einem Obertrum und einem Untertrum bekannt, wobei zwischen dem Obertrum und dem Untertrum eine Magneteinrichtung angeordnet ist, um aus unterhalb des Förderbandes liegenden Materialmischungen ferromagnetische Materialien anzuziehen. Diese werden gegen die Unterseite des Untertrums gezogen und von dem Förderband weiterbewegt. Sobald dieses den Einflußbereich der Magneteinrichtung verläßt, läßt auch die magnetische Wirkung nach, so daß die ferrogmagnetischen Teile sich von dem Untertrum lösen und abfallen.

Aus dem Gebrauchsmuster DE 297 07 008 ist die Verwendung eines Magnetförderers zur Zuführung von Stahlfasern oder -spänen in dosierter Form zu einem Mischbehälter eines Betonmischers bekannt. Der Magnetförderer weist oberhalb der Förderbahn einen bodenfreien Behälter auf so daß das magnetische Material von dem Förderband aus dem Behälter abgezogen werden kann. Diese Anordnung hat allerdings den Nachteil, daß die Anpreßkraft der im Behälter befindlichen Stahlfasern auf das Förderband zu groß werden und damit zu Beschädigungen der Förderbahn führen kann.

Aufgabe der Erfindung ist es daher, eine Vorrichtung der eingangs angegebenen Art zu schaffen, mit der das Fördergut auf den Magnetförderer auf einfache Weise aufgebracht werden kann, ohne daß der Magnetförderer beschädigt wird oder daß zusätzliche Zuführ- und Dosiervorrichtungen erforderlich sind.

Diese Aufgabe wird durch die Merkmale des Anspruchs 1 gelöst. Erfindungsgemäß ist eine Stellvorrichtung vorgesehen, mit der die Aufnahmeseite der Förderbahn von oben herab auf das Fördergut derart absenkbar ist, daß das Fördergut an dem freien Ende aufgenommen und auf der Förderbahn weiterbefördert wird. Auf diese Weise ist sichergestellt, daß das Förderband nicht unnötig belastet wird, da das magnetisierbare Material von oben durch das Förderband aufgenommen wird. Vorzugsweise können hierdurch leichte Materialien, wie z.B. Stahlfasern oder Stahlspäne, aufgenommen werden, deren Eigengewicht es erlaubt, von dem wandernden Magnetfeld entlang der Förderbahn angezogen zu werden.

Für die Ausgestaltung des Magnetförderers bieten sich grundsätzlich zwei Möglichkeiten an. Zum einen kann die Förderbahn ortsfest ausgebildet sein, wobei die Förderbahn in diesem Fall vorzugsweise aus flachem, bandförmigem und magnetisch durchlässigem Material besteht. Unterhalb der Förderbahn ist eine Vorrichtung zur Erzeugung eines wandernden Magnetfeldes vorgesehen, das das Fördergut entlang der Förderbahn mit sich zieht. Hierbei ist es beispielsweise denkbar, daß unterhalb der Förderbahn ein Zugmittel verläuft, in dem Permanent- oder Elektromagnete gehaltert sind. Eine andere Möglichkeit besteht darin, daß unterhalb der Förderbahn Elektromagnete angeordnet sind, die über eine Steuervorrichtung derart ansteuerbar sind, daß ein wanderndes Magnetfeld sich entlang der Förderbahn ausbildet.

Bei einer anderen Ausgestaltung des Magnetförderers ist die Förderbahn beweglich ausgebildet und besteht aus einem über Umlenk- und Leitrollen geführten Band, in dem Permanent- oder Elektromagnete gehaltert sind. Soweit Elektromagnete Verwendung finden, werden diese in üblicher Weise über Schleifmittelkontakte mit Strom versorgt. Besonders vorteilhaft ist es, wenn die Elektromagnete vor Erreichen der Aufnahmeseite mit Strom versorgt werden und wenn diese auf der Abwurfseite zum Abwerfen des Fördermaterials wieder ausgeschaltet werden. Auf diese Weise ist ein besonders gezieltes Aufnehmen und Abwerfen des Fördermaterials möglich.

Nach einer bevorzugten Ausführungsform ist vorgesehen, daß die Stellvorrichtung aus einem vertikal verstellbaren Hydraulikzylinder besteht, an dem der Magnetförderer mit schräg gestellter Förderbahn befestigt ist, wobei die Aufnahmeseite gegenüber der Abwurfseite tiefer gelegen ist. Der Magnetförderer ist somit in vertikaler Richtung durch den Hydraulikzylinder verfahrbar. Sobald der Abstand zu dem Fördergut sich aufgrund des bereits aufgenommenen Förderguts vergrößert, kann die Aufnahmeseite der Förderbahn gegenüber dem Fördergut durch den Hydraulikzylinder nachgestellt werden.

Nach einer anderen bevorzugten Ausführungsform ist ein Teil der Förderbahn um eine Schwenkachse gelagert, um die die Aufnahmeseite durch die Stellvorrichtung verschwenkbar ist. In diesem Fall wird die Aufnahmeseite der Förderbahn bis zu einem passenden Abstand herabgeschwenkt.

Nach einer weiteren bevorzugten Ausführungsform ist vorgesehen, daß an der Abwurfseite ein Mischbehälter, vorzugsweise ein Betonmischer angeordnet ist. Grundsätzlich ist es bekannt, zur Erhöhung der Zugfestigkeit von Beton dem Beton Stahlfasern zuzusetzen, die sich aufgrund ihrer Form und Länge mit dem Beton verklammern. Mit der erfindungsgemäßen Vorrichtung ist es besonders einfach, die Stahlfasern aus dem Behälter aufzunehmen und dem Betonmischer zuzuführen. Vorzugsweise sind die Stahlfasern dabei in einem nach oben offenen Behälter gelagert, in den die Aufnahmeseite des Magnetförderers absenkbar ist. In weiterer Ausgestaltung kann dabei vorgesehen sein, daß der Magnetförderer mit Behälter auf einer gemeinsamen Waage abgestützt ist. Diese Ausgestaltung gestattet es, den Magnetförderer dann zu stoppen, wenn die Waage eine Gewichtsabnahme zeigt, die der vorher bestimmten zusetzenden Menge an Stahlfasern der Betonmischung entspricht. Alternativ ist es in entsprechender Weise möglich, das Magnetförderer und Behälter auf jeweils einzelnen Waagen abgestützt sind.

Zweckmäßigerweise ist vor der Abwurfseite der Förderbahn ein sich über deren Seite erstreckender Abstreifer angeordnet. Mit diesem Abstreifer läßt sich die Schichthöhe der der Mischung zuzusetzenden Stahlfasern einstellen. Darüberhinaus führt dieser Abstreifer auch zu einer Vergleichmäßigung des Stroms der zuzusetzenden Stahlfasern.

Zweckmäßigerweise ist die Geschwindigkeit des wandernden Magnetfeldes einstellbar. Auf diese Weise läßt sich ebenfalls die gewünschte Dosierung beeinflussen.

Die Förderbahn kann eine L- oder Z-förmige Gestalt in der Weise aufweisen, daß deren etwa horizontale Abschnitte stumpfe Winkel mit dem schräg verlaufenden Abschnitt einschließen.

Nach einer bevorzugten Ausführungsform der Erfindung ist vorgesehen, daß das Gestell des Magnetförderers verfahrbar ist. Hierzu kann das Gestell selbst mit Rädern versehen oder aber ein Fahrgestell vorgesehen sein, auf das das Gestell des Magnetförderers unmittelbar oder über eine Wägeeinrichtung abgestützt ist.

Weitere Einzelheiten und Vorteile der Erfindung werden im folgenden anhand der in der Zeichnung dargestellten Ausführungsbeispiele näher erläutert. In dieser zeigt:
- Fig. 1: eine schematische Seitenansicht einer ersten Ausführungsform der erfindungsgemäßen Vorrichtung zur Zuführung von Stahlfasern zu einem Betonmischer und
- Fig. 2: eine schematische Seitenansicht einer zweiten Ausführungsform der erfindungsgemäßen Vorrichtung zur Zuführung von Stahlfasern zu einem Betonmischer.

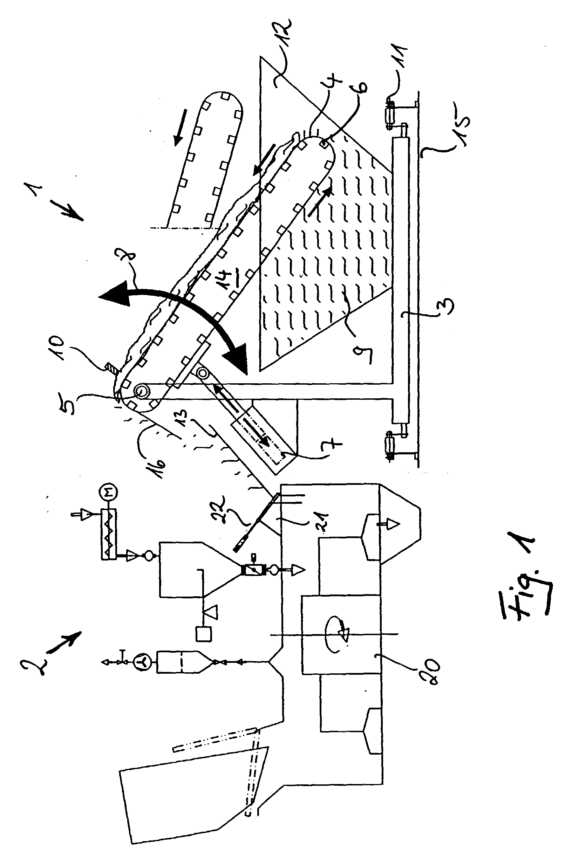

Fig. 1 zeigt eine erste Ausführungsform der erfindungsgemäßen Vorrichtung. Die erfindungsgemäße Vorrichtung 1 führt dabei Stahlfasern einem Betonmischer 2 zu. Die Vorrichtung 1 besteht aus einem Magnetförderer 14, der auf einem Gestell 3 um eine Schwenkachse 5 gelenkig gelagert ist. Unter einer Außenhaut des Magnetförderers läuft über nicht näher dargestellte Umlenk- und Leitrollen ein Förderband 4, an dessen Unterseite Elektromagnete 6 eingebettet sind. Zu deren Stromversorgung sind dabei entsprechende Schleifkontakte vorgesehen. Der Magnetförderer 14 ist gegenüber dem Gestell 3 durch einen Hydraulikzylinder 7 abgestützt, mit dem der Magnetförderer 14 um die Schwenkachse 5 verschwenkbar ist. Statt dem Hydraulikzylinder 7 kann auch ein Gebriebemotor vorgesehen sein, der auf die Welle der Schwenkachse 5 aufgesteckt ist. An der Aufnahmeseite des Magnetförderers 14 befindet sich ein Behälter 12, in dem Stahlfasern 9 gelagert sind. Das Gestell 3 ist mit dem Behälter 12 über Wägezellen 11 auf einer Grundplatte 15 abgestützt, so daß sich das Gewicht des Gestells mit Magnetförderer und Behälter sowie der in dem Behälter befindlichen Stahlfaserfüllung ständig erfassen läßt. Im Bereich der Abwurfseite des Magnetförderers ist an dem Gestell ein Abstreifer 10 gehaltert, mit dem sich die gewünschte Schütthöhe des Stahlfaserstroms einstellen läßt.

In dem dargestellten Beispiel ist die Abwurfseite des Magnetförderers 14 oberhalb der Zuführungsöffnung 21 eines Ringtrogmischers 20 angeordnet. Die Zuführungsöffnung 21 ist durch einen mit einem Antrieb versehenen Schieber 22 verschließbar. Dem Betonmischer 2 werden dabei in üblicher Weise durch Einfüllöffnungen Zement und Zuschläge sowie Wasser zugeführt. Zur Vermeidung von Staubbildung ist weiterhin eine Absaugeinrichtung mit vorgeschaltetem Filter vorgesehen.

Zur Zuführung der Stahlfasern 9 zu dem Betonmischer 20 wird die Aufnahmeseite des Magnetförderers 14 durch Bewegung des Hydraulikzylinders 7 in dem Behälter 12 abgesenkt. Durch die Anziehungskraft des Magnetfeldes werden die Stahlfasern 9 von der Förderbahn angezogen und zur Abwurfseite des Magnetförderers 14 transportiert. Ein Abstreifer 10 sorgt dafür, daß der Stahlfaserstrom mit einer gleichmäßigen Schütthöhe zur Abwurfseite des Magnetförderers gelangt. An der Abwurfseite werden die Stahlfasern durch eine Abstreifplatte 16 abgestreift und gelangen von dort über eine Prallplatte 13 in die Einfüllöffnung 21 des Betonmischers.

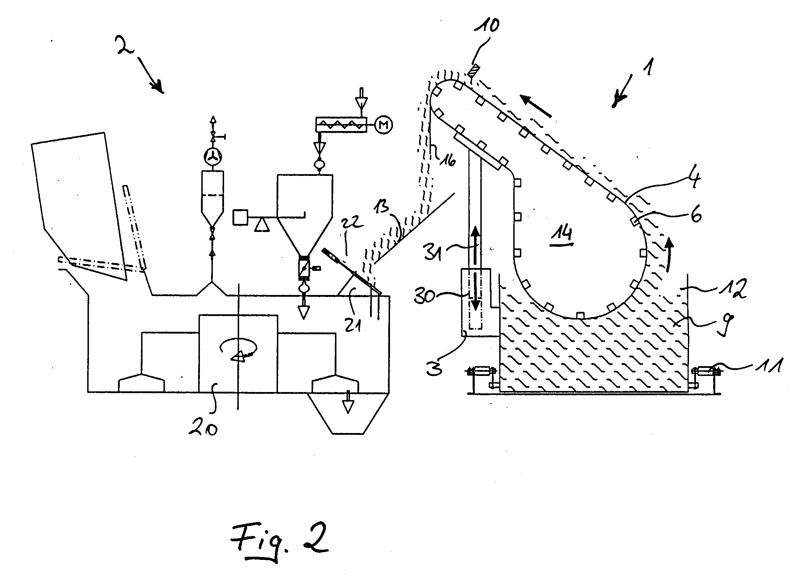

Fig. 2 zeigt eine schematische Seitenansicht einer zweiten Ausführungsform der erfindungsgemäßen Vorrichtung zur Zuführung von Stahlfasern zu einem Betonmischer. Soweit es sich um funktional gleiche Elemente handelt, wurde die Numerierung gegenüber Fig. 1 beibehalten. Die Ausführungsform gemäß Fig. 2 unterscheidet sich gegenüber der gemäß Fig. 1 im wesentlichen dadurch, daß der Magnetförderer 14 starr an einem vertikal angeordneten Hydraulikzylinder 30 angeordnet ist. Hierdurch läßt sich der Magnetförderer 14 in vertikaler Richtung verschieben. An der Aufnahmeseite weist die Förderbahn des Magnetförderers einen vergrößerten Radius auf, um gegenüber den Stahlfasern eine größere Berührungsfläche zu haben und um damit die Stahlfasern besser aufnehmen zu können.

## Patentansprüche

1. Vorrichtung zur Zuführung von magnetisierbarem Fördergut
mit einem Magnetförderer, der das Fördergut entlang einer Förderbahn von einer Aufnahmeseite zu einer Abwurfseite mittels eines wandernden Magnetfeldes befördert,
gekennzeichnet durch
eine Stellvorrichtung, mit der die Aufnahmeseite der Förderbahn von oben herab auf das Fördergut derart absenkbar ist, daß das Fördergut an dem freien Ende aufgenommen und auf der Förderbahn weiterbefördert wird.

2. Vorrichtung zur Zuführung von magnetisierbarem Fördergut nach Anspruch 1, dadurch gekennzeichnet, daß die Förderbahn ortsfest ausgebildet ist und aus flachem, bandförmigem und magnetisch durchlässigem Material besteht.

3. Vorrichtung zur Zuführung von magnetisierbarem Fördergut nach Anspruch 2, dadurch gekennzeichnet, daß unterhalb der Förderbahn ein Zugmittel verläuft, in dem Permanent- oder Elektromagnete gehaltert sind.

4. Vorrichtung zur Zuführung von magnetisierbarem Fördergut nach Anspruch 2, dadurch gekennzeichnet, daß unterhalb der Förderbahn Elektromagnete angeordnet sind, die über eine Steuervorrichtung derart ansteuerbar sind, daß ein wanderndes Magnetfeld sich entlang der Förderbahn ausbildet.

5. Vorrichtung zur Zuführung von magnetisierbarem Fördergut nach Anspruch 1, dadurch gekennzeichnet, daß die Förderbahn beweglich ausgebildet ist und aus einem über Umlenk- und Leitrollen geführten Band besteht, in dem Permenent- oder Elektromagnete gehaltert sind.

6. Vorrichtung zur Zuführung von magnetisierbarem Fördergut nach einem der Ansprüche 1 bis 5, dadurch gekennzeichnet, daß die Stellvorrichtung aus einem vertikal verstellbaren Hydraulikzylinder besteht, an dem der Magnetförderer mit schräggestellter Förderbahn befestigt ist, wobei die Aufnahmeseite gegenüber der Abwurfseite tiefergelegen ist.

7. Vorrichtung zur Zuführung von magnetisierbarem Fördergut nach einem der Ansprüche 1 bis 5, dadurch gekennzeichnet, daß ein Teil der Förderbahn um eine Schwenkachse gelagert ist, um die die Aufnahmeseite durch die Stellvorrichtung verschwenkbar ist.

8. Vorrichtung zur Zuführung von magnetisierbarem Fördergut nach einem der Ansprüche 1 bis 7, dadurch gekennzeichnet, daß das Fördergut aus Stahlfasern besteht.

9. Vorrichtung zur Zuführung von magnetisierbarem Fördergut nach einem der Ansprüche 1 bis 8, dadurch gekennzeichnet, daß an der Abwurfseite ein Mischbehälter, vorzugsweise ein Betonmischer, angeordnet ist.

10. Vorrichtung zur Zuführung von magnetisierbarem Fördergut nach einem der Ansprüche 1 bis 9, dadurch gekennzeichnet, daß das Fördergut in einem nach oben offenen Behälter gelagert ist, in den die Aufnahmeseite absenkbar ist.

11. Vorrichtung zur Zuführung von magnetisierbarem Fördergut nach Anspruch 10, dadurch gekennzeichnet, daß der Magnetförderer mit Behälter auf einer gemeinsamen Waage oder daß Magnetförderer und Behälter auf jeweils einzelnen Waagen abgestützt sind.

12. Vorrichtung zur Zuführung von magnetisierbarem Fördergut nach einem der Ansprüche 1 bis 11, dadurch gekennzeichnet, daß vor der Abwurfseite der Förderbahn ein sich über deren Breite erstreckender Abstreifer angeordnet ist.

13. Vorrichtung zur Zuführung von magnetisierbarem Fördergut nach einem der Ansprüche 1 bis 12, dadurch gekennzeichnet, daß die Geschwindigkeit des wandernden Magnetfeldes einstellbar ist.

14. Vorrichtung zur Zuführung von magnetisierbarem Fördergut nach einem der Ansprüche 1 bis 13, dadurch gekennzeichnet, daß die Förderbahn eine L- oder Z-förmige Gestalt aufweist, wobei deren etwa horizontale Abschnitte stumpfe Winkel mit dem schräg verlaufenden Abschnitt einschließen.

15. Vorrichtung zur Zuführung von magnetisierbarem Fördergut nach einem der Ansprüche 1 bis 14, dadurch gekennzeichnet, daß das Gestell des Magnetförderers verfahrbar ist.
